# EUROPÄISCHE PATENTSCHRIFT

(11) **EP 2 812 669 B1**
(45) Veröffentlichungstag und Bekanntmachung des Hinweises auf die Patenterteilung: **27.11.2019**
(21) Anmeldenummer: 13709046.0
(22) Anmeldetag: 07.02.2013
(51) Int. Cl.: G01N 1/32

(54) **KONTRASTIERUNGSVERFAHREN MITTELS LASER SOWIE VORRICHTUNG ZUR DURCHFÜHRUNG EINES KONTRASTIERUNGSVERFAHRENS**
LASER CONTRASTING METHOD AND APPARATUS FOR CARRYING OUT A CONTRASTING METHOD
PROCÉDÉ PERMETTANT D'OBTENIR UN CONTRASTE AU MOYEN D'UN LASER ET SON DISPOSITIF DE MISE EN OEUVRE

(30) Priorität: 10.02.2012 DE 102012002744
(43) Veröffentlichungstag der Anmeldung: 17.12.2014
(73) Patentinhaber: Arges GmbH, 92442 Wackersdorf (DE)
(72) Erfinder: BERGER, Manuel, 92421 Schwandorf (DE); SCHWAB, Daniel, 93059 Regensburg (DE); GUGGENMOS, Markus, 92421 Schwandorf (DE)
(74) Vertreter: Kruspig, Volkmar
(86) Internationale Anmeldenummer: PCT/EP2013/052471
(87) Internationale Veröffentlichungsnummer: WO 2013/117667

(56) Entgegenhaltungen:
- DE-A1- 3 642 211
- US-A- 5 019 208
- US-A- 5 656 811
- US-A1- 2001 030 981
- US-A1- 2004 129 878
- US-A1- 2005 148 157
- US-A1- 2005 208 465
- US-A1- 2005 272 223
- US-A1- 2010 090 108
- US-B1- 7 317 964

## Beschreibung

Die Erfindung betrifft ein Kontrastierungsverfahren mittels Laser gemäß Patentanspruch 1. Aufgabe der Metallographie ist es, wie z. B. in den Bereichen der Forschung und Entwicklung, der Schadensanalytik und der Qualitätssicherung, Gefügeuntersuchungen durchzuführen. Dabei werden die einzelnen Gefügeelemente sichtbar gemacht, um die Werkstoffeigenschaften, welche durch Legierungselemente, Wärmebehandlungen sowie Schmelz- und Erstarrungsbedingungen modifiziert werden können, bzgl. der Gebrauchseigenschaften zu beurteilen bzw. zu verbessern.

Das gebräuchlichste Verfahren zur Gefügekontrastierung ist das chemische Ätzen. Dabei wird mittels chemischer Ätzmittel eine Reaktion auf dem zu analysierenden Werkstoff hervorgerufen. Das chemische Ätzen geht jedoch mit zahlreichen Nachteilen einher. Zunächst müssen bzgl. unterschiedlichster zu analysierender Werkstoffe verschiedenste Ätzmittel verwendet werden, sodass eine kostenintensive Bereithaltung unterschiedlichster Ätzmittel notwendig ist. Außerdem sind zahlreiche chemische Ätzmittel als gesundheitsschädlich einzustufen.

Beim chemischen Ätzen handelt es sich um ein zeitaufwändiges Gefügekontrastierungsverfahren, da die Probe zunächst in einen Probenhalter eingegossen werden muss und einem relativ langen Temperierverfahren in einem Ofen und einem gezielt langen Abkühlverfahren unterzogen werden muss. Außerdem kann das chemische Ätzen bei einigen Materialien, wie z. B. bei hoch Cr-haltigen Edelstählen, nur bedingt angewendet werden.

DE 36 42 211 A1 offenbart ein Verfahren zur Kontrastierung und daran anschließenden materialografischen Analyse von Werkstoffen, bei welchem die Oberfläche einer materialografisch zu analysierenden Probe partiell einem Poliervorgang unterzogen wird.

Aus dem Vorgenannten ist es daher die Aufgabe der vorliegenden Erfindung ein alternatives Kontrastierungs- bzw. Gefügekontrastierungsverfahren zur Verfügung zu stellen, um die Nachteile der bisher bekannten Methoden zu überwinden. Außerdem soll eine Vorrichtung aufgezeigt werden, mit welcher ein alternatives Kontrastierungsverfahren durchgeführt werden kann.

Die Lösung der Aufgabe erfolgt durch ein Kontrastierungsverfahren mittels Laser gemäß Merkmalskombination des Patentanspruches 1, wobei die Unteransprüche mindestens zweckmäßige Ausgestaltungen und Weiterbildungen darstellen.

Erfindungsgemäß wird das Verfahren zur Kontrastierung und daran anschließenden materialografischen Analyse von Werkstoffen mittels Laser durchgeführt, wobei die Oberfläche einer materialografisch zu analysierenden Probe partiell einem Poliervorgang unterzogen wird und anschließend mit mindestens einem Laserstrahl derart bearbeitet wird, dass aufgrund der thermischen Ausdehnung der Körner der bearbeiteten Probenoberfläche ein Gefügebild erhalten wird, welches materialografisch analysierbar ist. Die Bearbeitung mit dem Laserstrahl wird auf der partiell polierten Oberfläche durchgeführt. Die Analyse wird mit Hilfe eines Mikroskops, insbesondere mit Hilfe eines Lichtmikroskops, durchgeführt.

Die Metallografie ist die Lehre vom Gefügeaufbau der Metalle und stellt damit eine Disziplin der Metallkunde dar. Aufgrund der zunehmenden Anzahl von Verbundwerkstoffen, sowie dem Aufkommen neuer, weiterentwickelter Werkstoffe wie z. B. Keramik/Metall-Systeme, wird mittlerweile die Bezeichnung Materialografie bevorzugt, da diese das gesamte Werkstoffspektrum abdeckt. Das offenbarte Gefügekontrastierung- bzw. Kontrastierungsverfahren eignet sich folglich sowohl zur Analyse von Metallen, Legierungen etc. als auch von Keramiken, Verbundwerkstoffen, etc.

Die zu analysierende Probe wird zumindest auf einem Teil seiner Oberfläche, also partiell, einem Poliervorgang unterzogen. Dieser Poliervorgang kann sowohl manuell als auch vollautomatisch mit einem Tuch erfolgen. Bei dem Polieren der Oberfläche kann es sich auch lediglich um ein Säubern der Oberfläche handeln. Es sei darauf hingewiesen, dass vor dem Poliervorgang ein Schleifvorgang erfolgen kann. Vorzugsweise wird ein Nassschleifen auf SiC-Papier bzw. auf einer Diamantscheibe durchgeführt. Zwischen den einzelnen Präparationsstufen wird die Probenoberfläche gereinigt, um Abrasivstoffe sowie gebildete Reaktionsschichten zu entfernen. Die Reinigung kann beispielsweise in einem Ultraschallbad erfolgen. Eine schnelle Möglichkeit zur Präparation der zu analysierenden Probe besteht mit Hilfe eines halbautomatischen Schleif- und Poliergeräts.

Die polierte Fläche wird anschließend mit mindestens einem Laserstrahl in mindestens einem Bearbeitungsvorgang bearbeitet, wobei durchaus denkbar ist, die Bearbeitung mit mehreren Laserstrahlen auszuführen. Der Vorteil bei der Bearbeitung mit mehreren Laserstrahlen liegt in der damit erzielten Schnelligkeit des Bearbeitungsvorgangs. Als Abtastvorgang bzw. Bearbeitungsvorgang wird das Auftreffen eines Laserstrahls auf die Probenoberfläche bezeichnet. Vorzugsweise wird die Oberfläche der materialografisch zu analysierende Probe mehrere Male bearbeitet, d. h. der Laserstrahl trifft mehrere Male auf einem Punkt der Oberfläche der zu analysierenden Probe auf. Die Anzahl der Bearbeitungs- bzw. Abtastvorgänge bzw. der Überfahrten mit dem Laserstrahl hängt vom zu bearbeiteten Material und/oder der gewünschten Kontrastierungsintensität ab. Aufgrund des Auftreffens thermischer Energie auf der Oberfläche der Probe erfolgt eine thermische Ausdehnung der Körner der Probenoberfläche, wodurch ein der jeweiligen Probe entsprechendes typisches Gefügebild erzeugt wird. Dieses Gefügebild kann materialografisch z. B. mit Hilfe eines Lichtmikroskops analysiert werden.

Mit Hilfe des Laserstrahls wird auf die Probenoberfläche eine bestimmte Energiedichte aufgebracht, wobei sich, abhängig vom Wärmeausdehnungskoeffizienten des Probenmaterials, die Körner der bearbeiteten Oberfläche ausdehnen und an den Korngrenzen zugleich ein Abdampfen aufgrund der größeren Fehlstellendichte im Kristallgitter, also ein Materialabtrag, statt findet. Das Gefüge wird sichtbar verstärkt, wobei die Kontrastverstärkung bis zur Oxidationsgrenze erfolgt.

Die Bearbeitung der Probenoberfläche mit mindestens einem Laserstrahl kann unter Schutzgasatmosphäre bzw. Sauerstoffatmosphäre erfolgen.

Bei einer Bearbeitung unter Sauerstoffatmosphäre, wird die Probe in eine Prozessgaskammer bzw. Schutzgaskammer gelegt oder platziert, welche mit Sauerstoff geflutet wird. Sauerstoff wirkt in diesem Zusammenhang als Aktivgas. Von besonderem Vorteil ist, dass das erfindungsgemäße Verfahren auch unter Luftatmosphäre angewandt werden kann. Somit kann eine materialografisch zu untersuchende Probe beispielsweise am Produktionsort mit dem erfindungsgemäßen Verfahren bearbeitet werden, sodass keine Kammer zur Herstellung einer Sauerstoffatmosphäre notwendig ist.

Abhängig vom Material der zu analysierenden Probe, kann es vorteilhaft sein, die Laserbearbeitung unter Sauerstoffatmosphäre durchzuführen. Bei der Verwendung von Aktivgas - in diesem Fall Sauerstoff - wird eine Oxidation der ersten oberflächennahen Atomlage verstärkt, was zu einem besseren Kontrast bzw. Farbunterschied aufgrund verschiedener Gitterausrichtungen der einzelnen Körner führt. Auch die Verwendung eines Inertgases, wie z. B. Argon, ist möglich. Ein Inertgas unterdrückt die Oxidation der Oberfläche und somit die farbige Kontrastierung. Dies kann bei der Darstellung verschiedener Phasen, wie z. B. der Sigma-Phase zusammen mit dem, Gefüge, von Vorteil sein.

Die zu analysierende Probe oder die zu analysierenden Proben können in eine Harz- bzw. Kunststoffmaterial eingebettet werden, um eine bessere Handhabung zu erzielen. Dies ist jedoch bei dem erfindungsgemäßen Kontrastierungsverfahren mittels Laser nicht unbedingt notwendig, da die Materialprobe einfach in bereits bekannte Werkzeugaufnahmen zur Laserbearbeitung eingespannt werden kann.

Beim erfindungsgemäßen Kontrastierungsverfahren ist vorgesehen, dass die Probenoberfläche partiell auf einer Fläche von 0,1 mm x 0,1 mm bis 50,0 mm x 50,0 mm rasterartig bearbeitet wird. Es wird deutlich, dass lediglich relativ kleine Oberflächenabschnitte der Proben mit dem Laserstrahl bearbeitet werden müssen, um ein Gefügebild zu erhalten. Die Abmaße der zu bearbeitenden Oberflächenabschnitte können wesentlich geringer sein, als dies bei konventionellen Kontrastierungsverfahren wie z. B. dem chemischen Ätzen bekannt ist.

Der Vorteil der geringen Abmaße der zu bearbeitenden Oberflächenabschnitte liegt bspw. darin, dass auf einer partiell polierten Oberfläche einer zu analysierenden Probe zunächst kleine Testquadrate von 1,0 mm x 1,0 mm bearbeitet werden können, um nach der Festlegung der endgültigen Verfahrensparameter größere Quadrate von 3,0 mm x 3,0 mm bearbeiten zu können, ohne die Oberfläche noch einmal polieren zu müssen, da neben dem kleinem Testquadrat noch ausreichend Platz für weitere Bearbeitungsquadrate vorhanden ist.

Die Bearbeitung der Probenoberfläche mit dem Laserstrahl erfolgt vorzugsweise rasterartig. D. h. es wird kein bidirektionaler Modus bzgl. der Bearbeitungsvorgänge aktiviert. Der Laserstrahl wird vielmehr immer nur in einer Bearbeitungsrichtung aktiviert, sodass der Laserstrahl bzgl. eines Bearbeitungsquadrates immer an derselben Kante mit dem Abtasten beginnt. Die Probenfläche wird partiell in Form parallel liegender Bearbeitungslinien mit dem Laserstrahl bearbeitet.

Der Abstand zwischen den Bearbeitungslinien beträgt zweckmäßigerweise 0,1 mm - 0,001 mm.

Als Laserquelle des Laserstrahls wird in einer Ausführungsform, die nicht Teil der Erfindung ist, ein Faserlaser verwendet, welcher im cw-Betrieb , also im continous wave- bzw. im Dauerstrichbetrieb, bei der Bearbeitung der Probenoberfläche von bspw. Stahl, Titan und Wolfram zum Einsatz kommt. Bei der Analyse von Aluminium und Aluminiumlegierungen ist es von Vorteil einen gepulsten Laser zu verwenden. Die Wellenlänge des verwendeten Lasers liegt vorzugsweise bei 1.000 nm bis 1.200 nm, insbesondere bei 1.050 nm bis 1.100 nm, insbesondere bei 1.060 nm bis 1.080 nm, insbesondere bei 1.064 nm.

Dabei kann ein Diodenlaser als Laserquelle dienen, wobei die Wellenlänge des Diodenlasers bspw. 970 - 980 nm beträgt.

Während des Kontrastierungsverfahrens gibt es sowohl veränderliche als auch konstante Verfahrensparameter. Bei den veränderlichen Verfahrensparametern handelt es sich um die Leistung des Lasers sowie den Vorschub, mit welchem der Laserstrahl über die Probenoberfläche geführt wird. Außerdem kann variabel gestaltet werden, ob ein Aktivgas, wie z. B. Sauerstoff, zum Einsatz kommen soll. Die Fokuslage des Laserstrahls sowie die Zahl der Abtastvorgänge bzw. der Laserüberfahrten kann je nach Anwendungsfall variabel gestaltet werden. Auch der Abstand zwischen den Bearbeitungslinien kann individuell angepasst sein.

Typische konstante Parameter während des Kontrastierungsverfahrens sind z. B. die vorgeschriebenen mono-direktionalen Bearbeitungswege des Laserstrahls, die Auswahl der Laserquelle sowie des cw- oder gepulsten Betriebes und der eingestellte Winkel bzgl. des Abtastvorganges bzw. der Winkel der Überfahrten des Laserstrahles.

Das beschriebene erfindungsgemäße Verfahren wurde bereits für zahlreiche Materialien getestet. Bei folgenden Materialien konnten gute Ergebnisse bzgl. des erhaltenen Gefügebildes erzielt werden: S235JR (Handelsname: St37), 20MnB4, Damaszener Stahl, 42CrNiMo6, X20Cr13 (Handelsname: Cronifer), X5CrNiMo17-12-2, X13CrMnMoN18-14-3 (Handelsname: P2000), X8CrMnN 18 18 (Handelsname: P900), X2NiCoMoTi18-12-4 (Handelsname: Mar350), GX150CrNiMoCuN41-6-2 (Handelsname: Noricrom), C1CrNiMoCu25-20-2 (Handelsname: Norilium), GGV (Gusseisen vermicular), GGL (Gusseisen lamellar), CoNi35Cr20Mo (Handelsname: MP35N), CoCr28Mo6 (Handelsname: Protasul, Endocast), Al 99,5 % (Handelsname: AW 1050 A), AlSi7Mg (Handelsname: AW 42100), AlSi12MgCuNi, AlMg3, AlZn5,5MgCu; Ti-6Al-2Sn-4Zr-6Mo (Handelsname: Ti6246 Titan), Wolfram. Selbstverständlich handelt es sich hierbei nicht um eine abschließende Aufzählung möglicher Materialien, deren Gefügebilder mittels des erfindungsgemäßen Kontrastierungsverfahrens ermittelt werden können.

Wie sich bei ersten Versuchen herausgestellt hat, können mit dem Erfindungsgemäßen Verfahren sogar Gleitlinien und Delta Ferrit dargestellt werden. Gleitlinien entstehen bei Schwachstellen in Atomstrukturen. Die Auswertung dieser Linien ist bei der Untersuchung von Materialermüdungen von großer Bedeutung. Weitere erhebliche Vorteile des Verfahrens gegenüber konventioneller Gefügekontrastierungsverfahren sind: für sämtliche Materialien anwendbar, keine Artefaktbildung, schnelles Verfahren, vom Verfahren gehen keine gesundheitlichen Risiken aus und gute Reproduzierbarkeit des Verfahrens, u. U. zerstörungsfreie Gefügeuntersuchungen an großen Bauteilen.

Die Vorrichtung zum Durchführen eines Kontrastierungsverfahrens mittels Laser umfasst eine Laserquelle, eine Laserstrahlablenkvorrichtung bzw. einen Scanhead sowie eine Steuervorrichtung zur Steuerung der Laserquelle und/oder eine Steuervorrichtung zur Steuerung der Laserstrahlablenkvorrichtung umfasst.

Bei der Laserquelle handelt es sich vorzugsweise um einen Faserlaser oder einen lasergeführten Diodenlaser, welcher bei den meisten Proben zum Einsatz kommen kann. Bei GGL (Gusseisen mit Lamellengrafit) kann beispielsweise ein CO₂-Laser eingesetzt werden. Zweckmäßigerweise handelt es sich bei der Laserquelle um einen cw-Laser, d. h., dass die Laserquelle im cw-Betrieb ist und somit eine Lichtwelle konstanter Intensität abstrahlt.

Es hat sich herausgestellt, dass bei der Bearbeitung von Aluminium die Verwendung gepulster Laser von Vorteil ist. Die Laserquelle weist vorzugsweise eine Wellenlänge von 800 - 1.100 nm auf.

Die Vorrichtung umfasst des Weiteren vorzugsweise ein Lichtmikroskop. In einer besonders bevorzugten Ausführungsform der Erfindung, sind die Laserquelle, die Laserstrahlablenkvorrichtung und die Steuervorrichtung neben einem Lichtmikroskop integriert, sodass die Vorrichtung einen kompakten Aufbau aufweist und einfach an den jeweiligen Einsatzort transportiert werden kann. In Stahlwerken oder anderen Metall herstellenden oder verarbeitenden Betrieben ist dies von besonderer Bedeutung.

In einer weiteren Ausführung weist das Lichtmikroskop einen DIC-(Differential-Interferenz-Kontrast) Filter auf.

In einer weiteren Ausführungsform kann die Vorrichtung eine Prozessgaskammer umfassen. Mit Hilfe einer Prozessgaskammer kann das erfindungsgemäße Kontrastierungsverfahren mittels Laser beispielsweise unter Schutzgasatmosphäre durchgeführt werden. Hierfür weist die Prozessgaskammer eine Gaszufuhr, also eine Prozessgasversorgungseinrichtung auf. Beispielsweise kann über mindestens eine, in der Prozessgaskammerwand befindliche Düse Prozessgas in die Prozessgaskammer zugeführt werden. Die zu analysierende Probe befindet sich während des Kontrastierungsverfahrens in der Prozessgaskammer.

Die Größe, vorzugweise die Höhe, der Prozessgaskammer kann an eine festgelegte Brennweite angepasst sein. Außerdem kann die Prozessgaskammer eine Kühlvorrichtung, insbesondere einer Wasserkühlvorrichtung, aufweisen. Ein Kühlung bzw. eine Wasserkühlung der zu analysierenden Probe ist aufgrund der geringen Wechselwirkungszeit nicht zwingend notwendig, kann aber in manchen Anwendungsfällen, insbesondere bei der Analyse und Bearbeitung von Werkstücken geringer Dicke vorteilhaft sein.

Des Weiteren kann die Vorrichtung einen Probenhalter aufweisen, welcher zur Halterung bzw. Fixierung der zu analysierenden Probe dient. Der Probenhalter besteht vorzugsweise aus mehreren Einzelteilen, sodass eine variable Probengeometrie und/oder eine gleichbleibende vertikale Höhe, nämlich eine gleichbleibende Fokusebene, garantiert sind. Der Probenhalter weist vorzugsweise einen Schraubaufsatz auf, welcher die zu untersuchenden Bauteile arretiert und gegen eine definierte Oberfläche drückt um die Fokushöhe und somit einen kontinuierlichen Prozessverlauf zu garantieren. Der Probenhalter ist vorzugsweise in der Prozessgaskammer befindlich bzw. platziert, sodass das erfindungsgemäße Kontrastierungsverfahren in der Prozessgaskammer durchgeführt werden kann.

In einer weiteren Ausführungsform kann der Probenhalter eine Kühlvorrichtung, insbesondere einer Wasserkühlvorrichtung, aufweisen.

Vorzugsweise befinden sich die Laserstrahlablenkvorrichtung, der Probenhalter, die Prozessgaskammer, sowie die Steuervorrichtung zur Steuerung der Laserstrahlablenkvorrichtung und/oder die Steuervorrichtung zur Steuerung der Laserquelle in einem Gehäuse.

Die Erfindung wird im Folgenden anhand eines Ausführungsbeispieles unter Bezugnahme auf die beigefügten Zeichnungen näher erläutert.

Hierbei zeigen:
- Fig. 1a - 1c: Gefügebilder, welche aufgrund chemischer Ätzung erhalten werden;
- Fig. 2a - 2c: vergleichende Gefügebilder, welche aufgrund Kontrastierung mittel Laser erhalten werden;
- Fig. 3: austenitisches Gefüge (X8CrMnN18-18);
- Fig. 4: austenitisches Gefüge (X1CrNi19-9);
- Fig. 5: austenitisches-ferritisches Gussgefüge (GX150CrNiMoCuN41-6-2) und
- Fig. 6: Aufbau einer Vorrichtung zur Durchführung eines Kontrastierungsverfahrens mittels Lasers und
- Fig. 7: einen weiterer Vorrichtungsaufbau zur Durchführung eines Kontrastierungsverfahrens mittels Lasers.

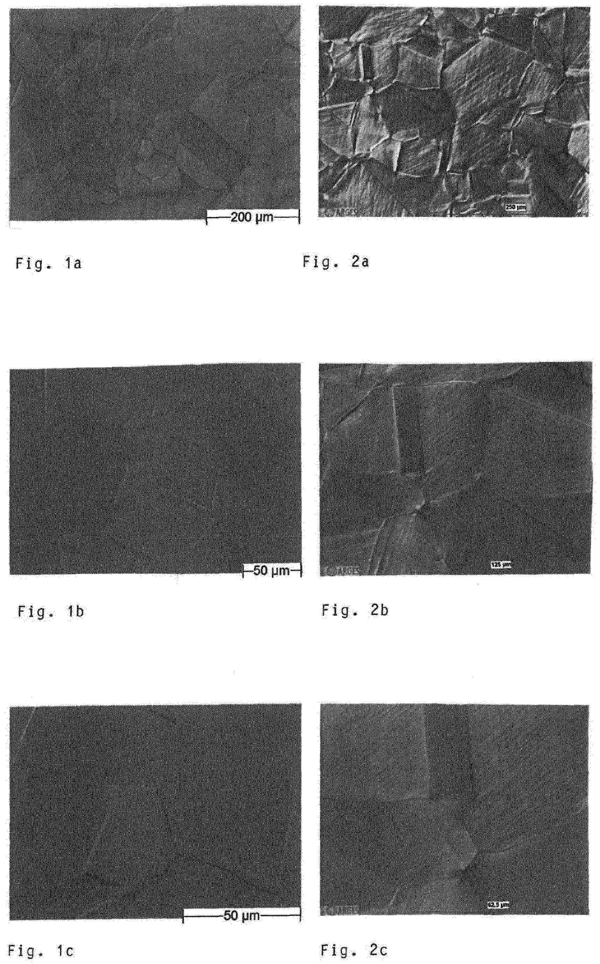

Um die weitgreifenden Möglichkeiten des Kontrastierungsverfahrens mittels Lasers anschaulich zu verdeutlichen zeigen die Fig. 1a - 1c und Fig. 2a - 2c eine Gegenüberstellung bzgl. des chemischen Ätzens und der Bearbeitung mittels Lasers. Auf der linken Seite sind Gefügebilder abgebildet, welche aufgrund chemischen Ätzens entstehen. Die Darstellungen der rechten Seite betreffen Beispiele bzgl. des erfindungsgemäßen Kontrastierungsverfahrens mittels Laser. Die sechs Gefügebilder betreffen jeweils das Material X8CrMnN 18 18 (P900).

Mit Hilfe des Laserstrahls wird auf die Probenoberfläche eine gewisse Energiedichte aufgebracht, wobei sich, abhängig vom Wärmeausdehnungskoeffizienten des Probenmaterials, die Körner der bearbeiteten Oberfläche ausdehnen und an den Korngrenzen zugleich ein Abdampfen, also ein Materialabtrag, statt findet. Das Gefüge wird sichtbar verstärkt, wobei die Kontrastverstärkung bis zur Oxidationsgrenze erfolgt.

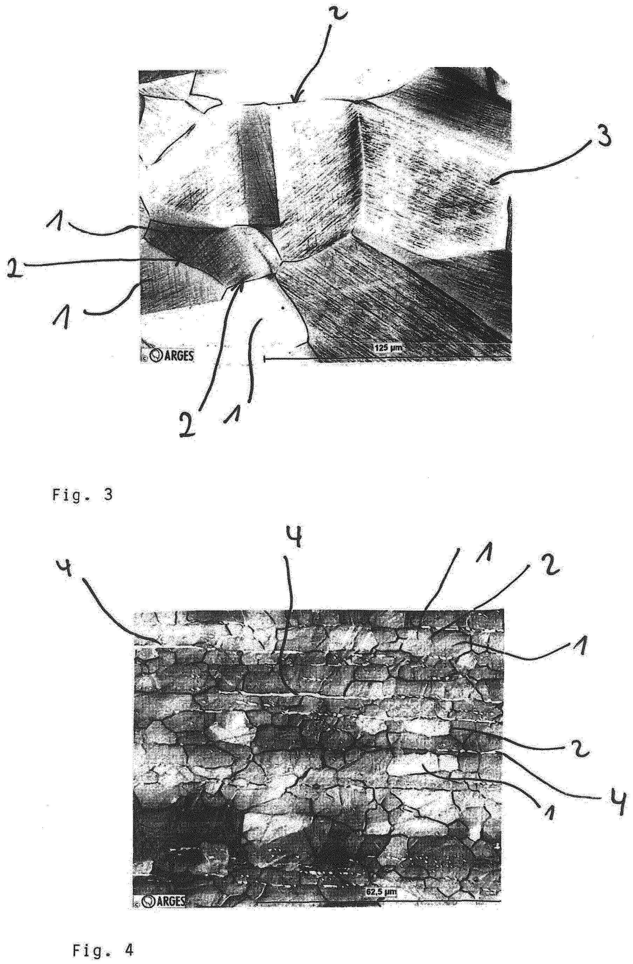

Das Gefügebild der Fig. 3 betrifft den Werkstoff 1.3516. Dabei handelt es sich um X8CrMnN18-18. Das Gefügebild wurde mit Hilfe des erfindungsgemäßen Kontrastierungsverfahrens geschaffen. Die einzelnen Körner 1 treffen an Korngrenzen 2 aufeinander. Wie in der Fig. 3 ersichtlich wird, können mit Hilfe des erfindungsgemäßen Verfahrens Gleitlinien 3 dargestellt werden. Diese Gleitlinien 3 sind in einem Korn als feine Linien, welche wesentlich feiner als die Korngrenzen 2 sind, dargestellt.

Das Gefügebild der Fig. 4 betrifft den Werkstoff 1.4316. Dabei handelt es sich um X1CrNi19-9. Auch in diesem Gefügebild sind Körner 1 und Korngrenzen 2 eindeutig zu erkennen. Außerdem gelingt es mit Hilfe des erfindungsgemäßen Kontrastierungsverfahrens intermetallische Phasen u. a. Delta Ferrit 4 sichtbar zu machen. Diese sind als weiße Stellen dargestellt.

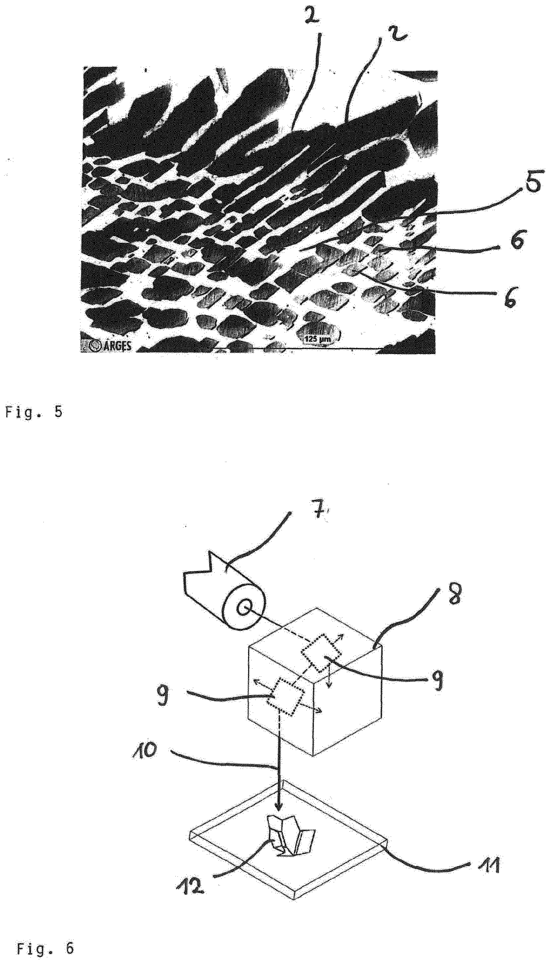

Gemäß Fig. 5 können auch austenitisch-ferritische Gussgefüge mit Hilfe des erfindungsgemäßen Verfahrens sichtbar gemacht werden. Zu erkennen sind das helle Austenit 5 und der dunkle Ferrit 6. Auch die Korngrenzen 2 sind deutlich zu erkennen.

In Fig. 6 wird eine Ausführungsform einer Vorrichtung zur Durchführung eines Kontrastierungsverfahrens mittels Laser dargestellt. Die Vorrichtung umfasst eine Laserquelle in Form eines cw-betriebenen Diodenlaser oder Faserlasers 7, eine Laserstrahlablenkvorrichtung 8 und eine nicht dargestellten Vorrichtung zur Steuerung der Laserquelle und/oder der Laserstrahlablenkvorrichtung 8. Die Laserstrahlablenkvorrichtung 8 wird oftmals auch als Scankopf bezeichnet, wobei sich in dieser Vorrichtung mindestens ein Spiegel 9 und im dargestellten Ausführungsbeispiel zwei Spiegel 9 und eventuell weitere Reflektoren befinden, welche den Laserstrahl 10 umlenken. Mit Hilfe der Spiegel 9 ist eine exakte Positionierung des Laserstrahls in X- und Y-Richtung auf der Probenoberfläche 11 möglich. Um in Z-Richtung eine Positionierung zu ermöglichen, kann beispielsweise der vollständige Scankopf entlang der Z-Achse verschoben werden.

An den Stellen der Probenoberfläche 11, auf welchen der Laserstrahl 10 auftrifft, wird eine Gefügebild 12 sichtbar. Die Probenoberfläche 11 wird vor der Laserbearbeitung zumindest partiell poliert und anschließend der Laserbearbeitung unterzogen. Dabei ist es vorgesehen, eine Fläche von 0,1 mm x 0,1 mm bis 50,0 mm x 50,0 mm der Probenoberfläche rasterartig mit dem Laserstrahl abzutasten bzw. zu bearbeiten. Der Polier- bzw. Präparationsvorgang kann mit Hilfe eines halbautomatischen Schleif- und Poliergeräts erfolgen.

Dabei wird die Fläche in Form parallel liegender Bearbeitungslinien bearbeitet, wobei die Bearbeitungslinien einen Abstand von 0,1 mm - 0,001 mm zueinander aufweisen.

Es hat sich gezeigt, dass bei mehrmaliger Bearbeitung der Fläche mit einem Laserstrahl geringerer Leistungsdichte (0,1x10⁶ W/cm²) bessere Ergebnisse als bei einmaliger Bearbeitung der Fläche mit einem Laserstrahl großer Leistungsdichte (1,0x10⁶ W/cm²) erzielt werden.

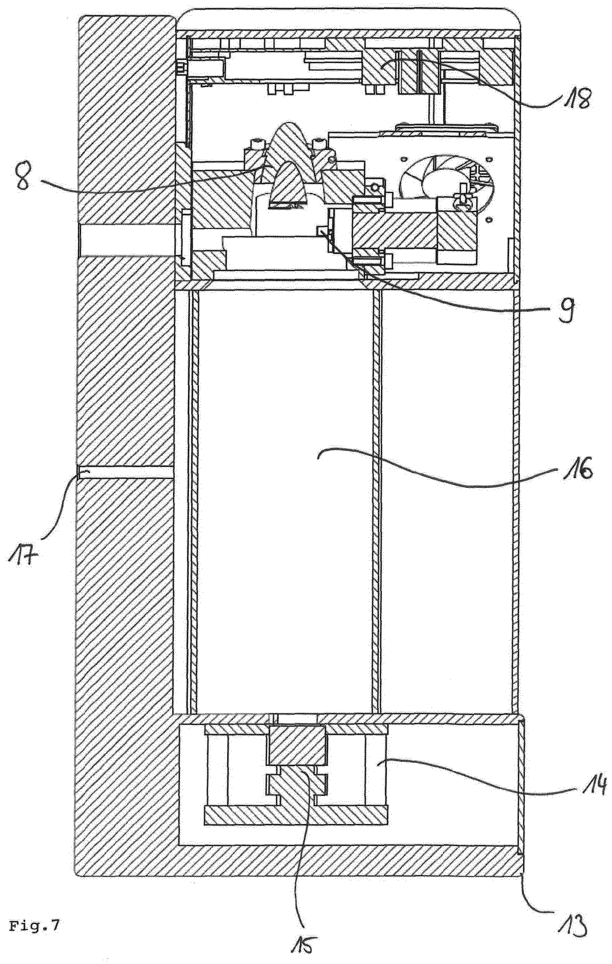

In Fig. 7 wird eine alternative Vorrichtung zur Durchführung eines Kontrastierungsverfahrens mittels Lasers dargestellt. Es wird ein Gehäuse 13 aufgezeigt, welches u. a. eine Prozessgaskammer 16 mit einer Prozessgasversorgungseinrichtung 17 aufzeigt. Mittels der Prozessgasversorgungseinrichtung 17 wird die Prozessgaskammer 16 mit dem Prozessgas, wie z. B. Sauerstoff oder Argon versorgt. Des Weiteren befindet sich in dem Gehäuse 13 ein Probenhalter 14 mit einem Schraubaufsatz 15. Mit Hilfe des Probenhalters 14 und dem Schraubaufsatz 15 wird das zu untersuchende Bauteil bzw. die zu analysierende Probe arretiert und gleichzeitig eine gleichbleibende Fokushöhe garantiert.

Der Laserstrahl wird über die dargestellte Laserstrahlablenkvorrichtung 8, welche einen dargestellten Spiegel 9 in der zugehörigen Spiegelhalterung aufweist, in die Prozessgaskammer 16 und auf die zu analysierende Probenoberfläche, welche in dem Probenhalter 14 arretiert ist, geführt. Die Laserstrahlablenkvorrichtung 8 wird mit Hilfe der Steuervorrichtung 18 gesteuert, wobei sich die Steuervorrichtung 18 ebenfalls im Gehäuse 13 befindet.

Des Weitern kann ein nicht dargestellter außerhalb oder innerhalb des Gehäuses befindlicher Controller zur Ansteuerung der Laserquelle vorgesehen sein.

### Bezugszeichenliste

- 1: Korn
- 2: Korngrenze
- 3: Gleitlinien
- 4: Delta Ferrit
- 5: Austenit
- 6: Ferrit
- 7: cw-Laserquelle
- 8: Laserstrahlablenkvorrichtung
- 9: Spiegel
- 10: Laserstrahl
- 11: Probenoberfläche
- 12: Gefügebild
- 13: Gehäuse
- 14: Probenhalter
- 15: Schraubaufsatz
- 16: Prozessgaskammer
- 17: Prozessgasversorgungseinrichtung
- 18: Steuervorrichtung für Laserstrahlablenkvorrichtung

## Patentansprüche

1. Verfahren zur Kontrastierung und daran anschließenden materialografischen Analyse von Werkstoffen, bei welchem die Oberfläche (11) einer materialografisch zu analysierenden Probe partiell einem Poliervorgang unterzogen wird,
**dadurch gekennzeichnet, dass**
anschließend die polierte Oberfläche mit mindestens einem Laserstrahl (10) derart bearbeitet wird, dass aufgrund der thermischen Ausdehnung der Körner (1) der bearbeiteten Probenoberfläche (11) ein Gefügebild (12) erhalten wird, welches anschließend mit Hilfe eines Mikroskops, insbesondere eines Lichtmikroskops, materialografisch analysiert wird.

2. Verfahren nach Anspruch 1,
**dadurch gekennzeichnet, dass**
die Bearbeitung der Probenoberfläche (11) mit mindestens einem Laserstrahl (10) unter Schutzgasatmosphäre und/oder unter Sauerstoffatmosphäre und/oder Luftatmosphäre erfolgt.

3. Verfahren nach Anspruch 1 oder 2,
**dadurch gekennzeichnet, dass**
die Probenoberfläche (11) partiell auf einer Fläche von 0,1 mm x 0,1 mm bis 50,0 mm x 50,0 mm rasterartig bearbeitet wird.

4. Verfahren nach einem der Ansprüche 1 bis 3,
**dadurch gekennzeichnet, dass**
die Probenoberfläche (11) partiell in Form parallel liegender Bearbeitungslinien mit dem Laserstrahl (10) bearbeitet wird, wobei der Abstand zwischen den Bearbeitungslinien vorzugsweise 0,1 mm - 0,001 mm beträgt.

5. Verfahren nach einem der Ansprüche 1 bis 4,
**dadurch gekennzeichnet, dass**
die Laserquelle (7) des Laserstrahls (10) ein cw-Faserlaser mit einer Wellenlänge von 1.064 nm ist.

6. Verfahren nach einem der Ansprüche 1 bis 4,
**dadurch gekennzeichnet, dass**
die Laserquelle des Laserstrahls ein Diodenlaser mit einer Wellenlänge von 970 - 980 nm ist.

## Claims

1. A method for contrasting and subsequently thereto materialographically analyzing materials, in which the surface (11) of a specimen to be materialographically analyzed is partially subjected to a polishing process,
**characterized in that**
the polished surface is subsequently processed by at least one laser beam (10) such that, due to the thermal expansion of the grains (1) of the processed specimen surface (11), a structure image (12) is obtained which is subsequently materialographically analyzed by means of a microscope, in particular a light microscope.

2. The method according to claim 1,
**characterized in that**
the processing of the specimen surface (11) by at least one laser beam (11) is performed under inert gas atmosphere and/or under oxygen gas atmosphere and/or air atmosphere.

3. The method according to claim 1 or 2,
**characterized in that**
the specimen surface (11) is partially processed on an area of 0.1 mm x 0.1 mm to 50.0 mm x 50.0 mm in a grid-like manner.

4. The method according to anyone of claims 1 to 3,
**characterized in that**
the specimen surface (11) is partially processed by the laser beam (10) in the form of processing lines extending in parallel, wherein the spacing between the processing lines preferably is 0.1 mm to 0.001 mm.

5. The method according to anyone of claims 1 to 4,
**characterized in that**
the laser source (7) of the laser beam (10) is a cw fiber laser having a wavelength of 1,064 nm.

6. The method according to anyone of claims 1 to 4,
**characterized in that**
the laser source of the laser beam is a diode laser having a wavelength of 970 to 980 nm.

## Revendications

1. Procédé de mise en contraste et d'analyse matérialographique successive de matériaux, dans lequel la surface (11) d'un échantillon à analyser matérialographiquement est partiellement soumise à une opération de polissage,
**caractérisé en ce que**
la surface polie est ensuite traitée à l'aide d'au moins un faisceau laser (10) de telle sorte que, grâce à la dilatation thermique des grains (1) de la surface traitée (11) de l'échantillon, on obtient une image micrographique (12) qui est ensuite analysée matérialographiquement à l'aide d'un microscope, en particulier à l'aide d'un microscope optique.

2. Procédé selon la revendication 1,
**caractérisé en ce que**
le traitement de la surface (11) de l'échantillon s'effectue à l'aide d'au moins un faisceau laser (10) dans une atmosphère de gaz protecteur et/ou dans une atmosphère d'oxygène et/ou dans une atmosphère d'air.

3. Procédé selon la revendication 1 ou 2,
**caractérisé en ce que**
la surface (11) de l'échantillon est partiellement œuvrée en forme de trame sur une surface de 0,1 mm x 0,1 mm à 50,0 mm x 50,0 mm.

4. Procédé selon l'une des revendications 1 à 3,
**caractérisé en ce que**
la surface (11) de l'échantillon est partiellement traitée par le faisceau laser (10) sous la forme de lignes de traitement parallèles, la distance entre les lignes de traitement étant de préférence de 0,1 mm à 0,001 mm.

5. Procédé selon l'une des revendications 1 à 4,
**caractérisé en ce que**
la source laser (7) du faisceau laser (10) est un laser à fibre cw d'une longueur d'onde de 1064 nm.

6. Procédé selon l'une des revendications 1 à 4,
**caractérisé en ce que**
la source laser du faisceau laser est un laser à diode d'une longueur d'onde de 970 à 980 nm.
